Europäisches Patentamt

(19) European Patent Office

Office européen des brevets

(11) Publication number: **0 033 026**
**A2**

(12) # EUROPEAN PATENT APPLICATION

(21) Application number: **80303868.6**

(22) Date of filing: **30.10.80**

(51) Int. Cl.³: **F 01 C 9/00**

(30) Priority: **24.01.80 PC T/US80/00076**

(43) Date of publication of application:
**05.08.81 Bulletin 81/31**

(84) Designated Contracting States:
**BE DE GB**

(71) Applicant: **CATERPILLAR TRACTOR CO.**
**100 Northeast Adams Street**
**Peoria Illinois 61629(US)**

(72) Inventor: **Clarke, John M.**
**13609 Luscern Street**
**Dunlap Illinois 61525(US)**

(74) Representative: **Brunner, Michael John et al,**
**Gill Jennings & Every 53 to 64, Chancery Lane**
**London WC2A 1HN(GB)**

(54) Slant axis rotary piston machine.

(57) A slant axis rotary piston machine includes a shaft (42) having an angularly offset eccentric (44) and a housing (10) defining a generally spherical chamber (22) journalling the shaft and containing the eccentric. A peripheral, generally sinuous partition (20) is fixed in the housing and extends radially into the chamber towards the eccentric. A rotor (62) is journalled on the eccentric and is of generally spherical exterior configuration (64) and has a peripheral groove (66, 68, 70) extending about and opening to its periphery. Each of the sides (66 and 68) of the groove face a corresponding side (24, 26) of the partition and define therewith at least two working volumes of variable volume. Gears (108, 110) synchronize relative movement between the shaft, the rotor and the housing, and ports (90, 92, 94, 96) provide for ingress and egress of working fluid to the working volumes.

./...

Fig.1.

- 1 -

CATERPILLAR TRACTOR CO.        GJE 5180/140

SLANT AXIS ROTARY PISTON MACHINE.

This invention relates to machines which operate on a working fluid, such as engines, compressors, expanders or the like. More particularly, the invention relates to a slant axis rotary piston type of such a machine.

Recent years have seen a considerable upsurge in the focus of attention upon positive displacement rotary machines to be utilized as engines, compressors, expanders or the like. The interest is in a large part due to the considerable reduction in the number of moving parts required in a rotary machine versus a reciprocating mechanism of similar displacement. This considerable advantage has, at the same time, been offset to some degree by disadvantages associated with rotary machines. For example, in rotary machines utilized as engines, there is frequently a high surface to volume ratio of the working volumes which reduces efficiency of the combustion process thereby reducing the amount of work obtained from a given unit of fuel and which will frequently result in an increase in hydrocarbon emissions over that generated by a reciprocating machine of similar displacement.

More particularly, when extended areas of opposed moving parts defining a working volume are in extremely close proximity to each other, the volume of working fluid between such parts in such an area does not participate in the combustion process, generally because the surfaces of the mechanical parts are cool and the spacing of the parts with respect to each other is so small that temperatures sufficient to maintain combustion cannot be obtained. In other words, as soon as the flame of combustion attempts to enter the space, it is immediately quenched by the cool surfaces. Consequently, fuel in the volume between the two closely adjacent surfaces does not burn and exits the machine as a hydrocarbon emission.

A volume of this type forming part of a working volume of an engine is known as "parasitic volume" because it does not assist in producing energy and in fact may actually absorb energy through the heat rejection process. In many cases, it may limit the maximum attainable compression ratio to some value less than the optimum value; and in most cases, the higher the compression ratio, the more efficiently will the engine operate. And in cases where, due to engine geometry, the maximum compression ratio is less than that determined to be optimum to permit the engine to operate on a particular cycle as, for example, a diesel cycle, the problem of maximizing engine efficiency is made more acute.

Trochoidal machines are typical of those wherein engine geometry limits the maximum attainable compression ratio. For reasons that not need be elucidated here, as one alters the geometry of a trochoidal engine to increase its compression ratio, the engine becomes bulky for the same power. Excessive bulk occurs at some power point which is less than desirable. Therefore, it has been necessary to provide such engines with multiple stages, generally two, the first for initial compression of air and final expansion of combustion gases and the second for final compression of air, combustion and initial expansion of combustion gases. This, of course, complicates the engine and increases the number of moving parts thereby making a rotary mechanism less attractive when compared to a reciprocating one.

Engine geometry difficulties as far as obtaining high compression ratios are nowhere near as prevalent in slant axis rotary piston machines and while the given slant axis rotary piston machine has a maximum compression ratio determined by its geometry, it will be sufficiently high that optimal diesel cycle compression ratios can be obtained without multiple staging. Nonetheless, other practical difficulties are present.

For example, in U.S. A 3,485,218 there is disclosed a slant axis rotary piston machine which may be used as an engine, compressor, expander or the like. In the several embodiments therein illustrated, a number of seals for sealing the various working volumes are carried by housing components but in each case, the various apexes on the rotor flanges must be sealed by seals carried by the rotor. It has been determined that, as a practical matter, interfacing the rotor seals with those carried by the housing to prevent substantial leakage is extraordinarily difficult. Consequently, while the sealing configuration illustrated in the above identified patent specification minimizes parasitic volume, there is sufficient leakage so as to more than overcome the advantage obtained by minimizing parasitic volume.

As a consequence, resort has been made to seal configurations wherein all seals are carried by the rotor so that the various seals may be satisfactorily interfaced with each other to cut leakage to an absolute minimum. This has resulted in seal grid configurations along the lines of that illustrated in U.S. A 4,026,662. A consideration of the operation of a slant axis rotary machine and the disposition of the so-called hub seals therein employed when in a grid configuration such as illustrated in the latter patent will show that there

- 4 -

is a considerable area of the hub between the hub seal and the rotor flange at maximum compression which is closely adjacent the inner spherical wall of the machine resulting in considerable parasitic volume at maximum compression and at points in the cycle close to maximum compression.  In fact, this parasitic volume becomes non-existent substantially only at full expansion. Thus, while high rates of seal leakage are elimintated by such configurations some undesirable parasitic volume, and the disadvantages accompanying the same, comes into existence.

According to the present invention a slant axis rotary piston machine comprising a housing defining a substantially spherical inwardly facing wall surface; a shaft having an angularly offset portion journalled within the housing; a rotor journalled on the offset portion; and means for synchronizing relative rotation betwen the housing, shaft and rotor, is characterized in that an annular substantially sinuous partition is fixed in the housing to extend radially into the chamber towards the offset portion, and that the rotor has a substantially spherical external configuration, and a groove, opening to the periphery of the rotor, having a pair of substantially radially extending opposed side walls, each facing a corresponding side of the partition and defining with the housing and the partition at least one working volume which varies as the shaft and rotor rotate relative to the housing.

Seals may be disposed on the rotor immediately adjacent the sides of the rotor wall to be carried thereby at its radially inner and outer extremities, enabling the entire seal grid to be carried by the rotor while eliminating parasitic volume to thereby improve operational efficiency of the machine.

One example of a machine according to the invention

- 5 -

will now be described with reference to the accompanying drawings in which:-

Figure 1 is a sectional view of a slant axis rotary piston mechanism made according to the invention;

Figure 2 is a somewhat schematic, developed view of the machine components in one orientation with respect to each other;

Figure 3 is a view similar to Figure 2 and illustrating the relation of the components to each other at a further stage with the rotor 30° advanced in the direction of the arrow in Figure 2; and,

Figure 4 is a view similar to Figures 2 and 3 illustrating the configuration of the components at still a further stage in the operating cycle with the rotor now advanced 60°.

The slant axis rotary piston machine illustrated in the drawings is in the form of a four stroke  internal combustion engine preferably operating on the diesel cycle.  However, it is to be understood that the invention is not limited to a machine utilized as an engine as the invention may be advantageously employed in compressors, expanders or the like.  Similarly, the principles of the invention are not restricted to machines operating on the four stroke principle, nor is the invention to be limited to a diesel cycle engine as the principles of the invention may be advantegeously employed in machines having operating cycles other than four stroke and other than the diesel cycle as, for example, the Otto or spark ignition cycle.

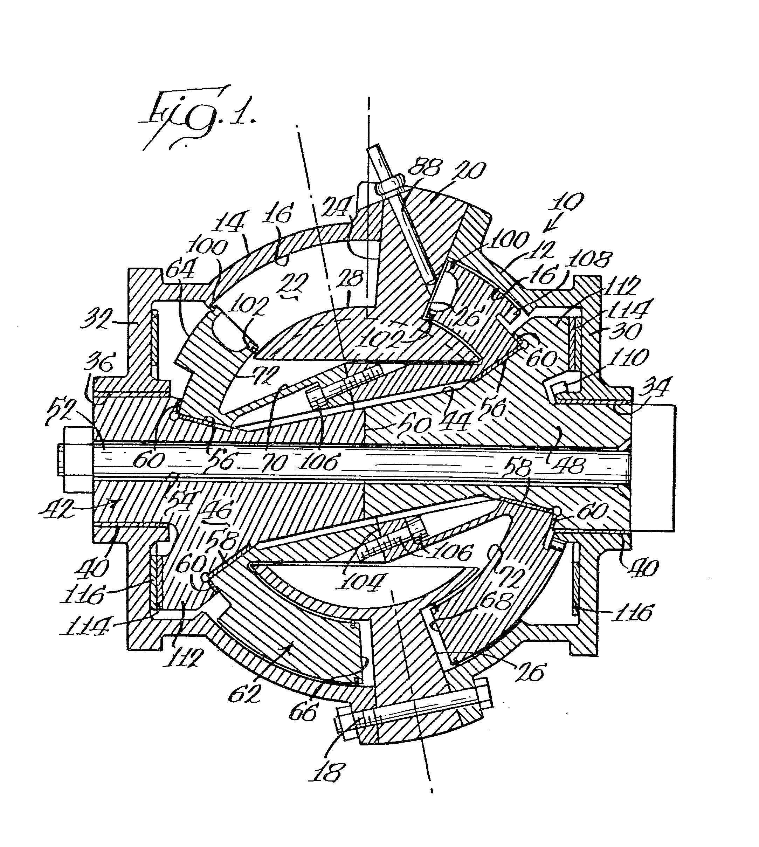

Referring to Figure 1, a mechanism made according to the invention includes a housing, generally designated 10 , which, as illustrated, is formed of two parts 12 and 14.  Each of the parts 12 and 14 includes an inner spherical surface 16 of the same diameter.  The housing parts 12 and 14 are assembled together by a plurality of bolts 18 (only one of which is shown) in such a way as to sandwich a partition 20 between them.

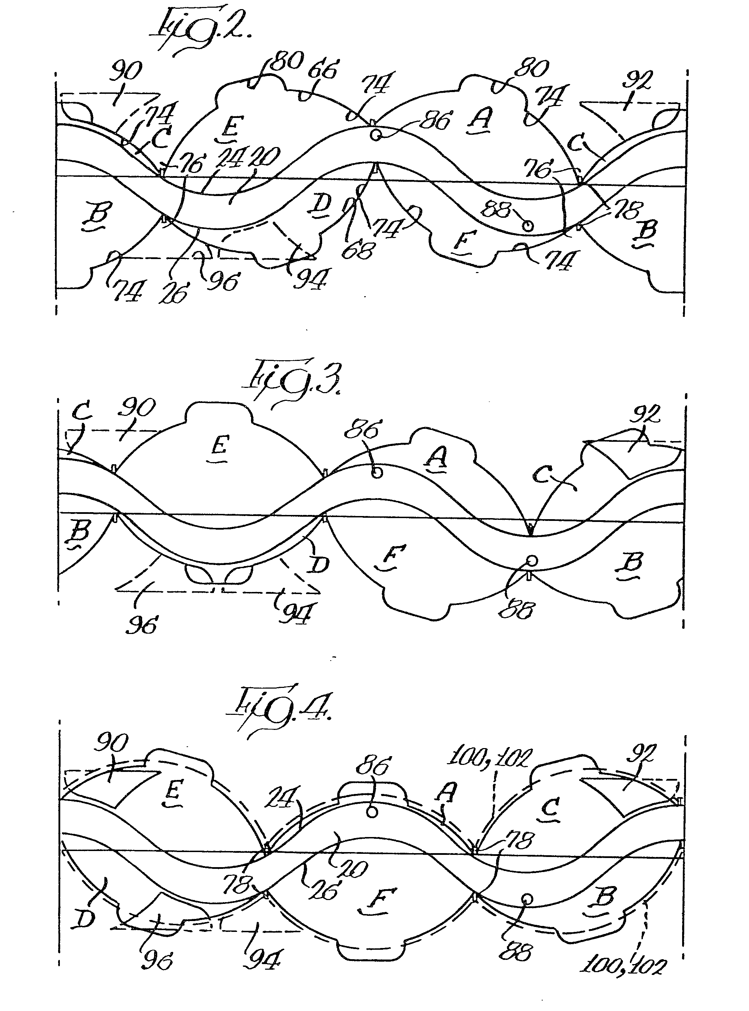

As seen in Figure 1, the partition 20 extends radially inwardly of the spherical surface 16 into a chamber 22 defined by the housing 10. As seen in Figure 2-4, opposite sides 24 and 26 of the partition 20 has a sinuous or sinusoidal configuration and the partition 20 extends about the entire periphery of the chamber 22 in the circumferential direction.

Returning to Figure 1, and recalling Figures 2-4, it will be appreciated that both of the sides 24 and 26 of the partition are somewhat conical as well as sinuous or sinusoidal.

At its radially inner extremity, the partition 20 terminates in a fixed spherical hub 28 located radially inwardly of the spherical wall 16 of the housing 10 by a considerable distance.

Each of the housing parts 12 and 14 has an end wall 30, 32 respectively. The end walls 30 and 30 have aligned openings 34 and 36 which receive journal bearings 40 which journal a shaft 42 for rotation within the housing 10. The shaft 42 includes an angularly offset eccentric 44 disposed within the chamber 22. Preferably, the shaft 42 is made in two parts, 46 and 48, by a split 50 located at the approximate mid-point of the eccentric 44. The shaft parts 46 and 48 are held in assembled relation by a tie bolt 52 extending through a hollow or bore 54 in the shaft parts 46 and 48. The purpose ———————————————————————

of this construction is to allow a rotor to be assembled to the eccentric 44 as will be seen.

Opposite ends of the eccentric 44 are provided with frusto-conical bearing surfaces 56, the arrangement being such that the minor bases of each frusto-conical bearing 56 are facing each other. Bearings 58 for journalling a rotor are disposed on the surfaces 56.

The bearings 58, at their axially outer extremities, include pilot portions 60 for purposes to be seen.

The mechanism includes a rotor, generally designated 62 which is generally spherical in configuration. The radially outer surface 64 of the rotor is spaced just inwardly of the spherical wall 16 of the housing 10 by a suitable clearance sufficient to prevent interference between the parts. The rotor 62 includes a peripheral groove in the circumferential direction, the groove having facing sidewalls 66 and 68 and a bottom wall 70 which is widened to receive the hub 26 on the radially inner end of the partition 20. The widened bottom 70 of the groove thus defined merges with corresponding sides 66 and 68 via a spherical surface 72 configured to be closely adjacent to the spherical surface 28 on the hub, spaced therefrom by a small distance sufficient to prevent interference between the parts.

Turning to Figs. 2-4, it will be seen that each of the rotor sides 66 and 68 is provided with a series of three, equally angularly spaced pockets 74 which are separated from each other by apexes 76. The apexes carry apex seals 78 which slidably engage associated sides 24 and 26 of the partition 20 for sealing purposes. Thus, it will be appreciated that each of the pockets 74 defines, together with the corresponding side 24 or 26 of the partition 20, the spherical wall 16 of the housing 10 and the spherical surface 28 of the hub, a working volume. When used as an engine, each of the pockets 74 will further be provided with a so-called "crater" 80 as is known in the art for maximizing combustion efficiency. In the embodiment shown, the apexes 76 on opposite groove sides 66 and 68 are aligned with each other although this need not be the case if the phasing of the sinuous shape of the sides 24 and 26 of the partition 20 is altered from that shown in Figs. 2-4.

For the phasing illustrated in Figs. 2-4, and for a mechanism operating on the diesel cycle, at approximately 90° spacing along the partition 20, a first fuel injector 86 opens through the partition side 24 and a second fuel injector 88 opens through the wall 26. Only the injector 88 is illustrated in Fig. 1.

The housing parts 12 and 14 are provided with inlet and outlet ports. In particular, as viewed in Figs. 2 and 4, an outlet or exhaust port 90 and an inlet or intake port 92 are located on the side 24 of the partition 20 and are spaced from their counterparts 94 and 96 on the side 26 of the partition 20, also by 90°. The ports 90-96 provide a means directing a working fluid to the working volumes of each side of the partition 20.

Referring to Fig. 2, three working volumes A, C and E are shown on the side 24 of the partition 20 while three similar working volumes B, D and F are shown on the side 26 of the partition 20. The working volume C is centered about the ports 90 and 92 and is at one of two points of minimum displacement in the cycle. For the direction of rotor motion illustrated in Fig. 2, the gases of combustion have just been exhausted from the working volume C through the exhaust port 90 at the left side of Fig. 2 and the rotor motion has already established communication between the volume C and the intake port 92 at the right side of Fig. 2. In Fig. 3, the volume of working volume C is increasing with a consequence that the combustion supporting medium, usually air, will be drawn into the working volume C through the inlet port 92.

Through this motion, the working volume D on the side 26 of the partition 20 has now moved to minimum displacement in connection with the ports 94 and 96 as shown in Fig. 3.

The working volume A is decreasing in volume and since it is no longer in communication with either of the ports 92 or 90, compression is occurring. As the working volume A progresses through the cycle from the position illustrated in Fig. 2 to the position illustrated in Fig. 4, it is reaching a minimum clearance configuration corresponding to maximum compression and, when approximately at the position shown in Fig. 4, fuel will be injected through the fuel injector 86 and combustion will occur.

Continued rotor motion of the volume A from the position illustrated in Fig. 4 will cause the same to occupy the position shown by volume E in Fig. 2, and this of course represents expansion of the combustion gases. Maximum expansion is shown by the position of the working volume E in Fig. 3 which also shows the maximum volume of any working volume in the cycle. Continued rotor motion causes the volume of the working volume E to begin to decrease and at this time, fluid communication with the exhaust port 90 is established as shown in Fig. 4. Because the volume is decreasing, the gases of combustion will be driven from the working volume E out of the exhaust port 90.

With the foregoing operational cycle in mind, reference is made to Fig. 1 wherein it is seen that radially outer peripheral seals 100 and radially inner peripheral seals 102 are carried by the rotor 62 and sealingly engage the spherical wall 16 of the housing 10 and the spherical hub 28, respectively for any position of rotor rotation within the chamber 22. The seals 100 and 102 are carried by the rotor in immediate adjacency to the walls 66 and 68 forming the rotor groove around the entire periphery of the groove. The location of the seals 100 and 102 is also shown in dotted lines in Fig. 4 and it will be appreciated from the showing thereof that parasitic volume of any consequence cannot come into existence. It will also be seen from Fig. 4 that the seals 100 and 102 may be interfaced easily with the apex seals 78 as by means of conventional bolt seals or the like. Thus, the entire seal grid is carried by the rotor and yet parasitic volume is eliminated.

Returning to Fig. 1, the rotor 62 is preferably split at its midpoint in the groove defined by the walls 66, 68 and 70 and as shown at 104. Cap screws 106 may be utilized as illustrated to assemble the rotor parts together and in this connection, the bearing parts 60 act to pilot the rotor parts into the proper position on the eccentric 44 as well as act in connection with the bearings 58 as journal and thrust bearings.

The requisite phasing between the components is achieved by a ring gear 108 carried on one side of the rotor 62 which meshes with a gear 110 within the housing and carried by the housing part 12 in concentric relation to the opening 34. As is well known, for a four stroke cycle, the gearing will be such that the shaft 44 will rotate through three revolutions for each single rotation of the rotor 62.

The gas loads on the rotor 62 impart thrust forces to the shaft 42 as is well known in slant axis rotary piston mechanisms and to this end, opposite ends of the eccentric 44 within the housing include noncircumferential bearing mounts 112 which mount thrust bearing pads 114. The thrust bearing pads 114 carried by the bearing mounts 112 are engaged with peripheral thrust bearing pads 116 carried by the ends 30 and 32 of the housing parts 12 and 14 respectively. Thus, axial length of the mechanism made according to the invention may be less than prior art slant axis rotary piston mechanisms which frequently carry thrust bearings interposed between the shaft and the housing at locations considerably
exterior from the housing  chamber 22.


From the foregoing it will be appreciated that
a slant axis rotary piston mechanism made  according to
the invention may be fabricated utilizing the basic
design characteristics, including the formula, set forth
in the previously identified Clarke patent, the details
of which are herein incorporated by reference; and
operate generally similarly thereto to provide the advantages thereof.  At the same time, however, a mechanism
made according to the present invention completely eliminates the leakage problems encountered in a mechanism of
the  type therein described by disposing the entire seal
grid on the rotor.  Moreover, the present invention eliminates the difficulties associated with parasitic volume
encountered in previous constructions wherein the entire
seal grid was carried by the rotor.

- 12 -

CLAIMS.

1. A slant axis rotary piston machine comprising a housing (10) defining a substantially spherical inwardly facing wall surface (16); a shaft (42) having an angularly offset portion (44) journalled within the housing (10); a rotor (62) journalled on the offset portion (44); and means (108, 110) for synchronizing relative rotation between the housing (10), shaft (42) and rotor (62), characterized in that an annular substantially sinuous partition (20) is fixed in the housing (10) to extend radially into the chamber (22) towards the offset portion (44), and that the rotor (62) has a substantially spherical external configuration (64), and a groove, opening to the periphery of the rotor, having a pair of substantially radially extending opposed side walls (66, 68), each facing a corresponding side (24,26) of the partition (20) and defining with the housing (10) and the partition (20) at least one working volume (A,B,C,D,E,F) which varies as the shaft (42) and rotor (62) rotate relative to the housing (10).

2. A machine according to claim 1, characterized in that the partition (20) also defines a radially inner, outwardly facing, part-spherical wall surface (28), and that the groove has an enlarged base (70) receiving the wall surface (28).

3.    A machine according to claim 2, characterized
in that the rotor (62) carries seals (100,102)
immediately adjacent the sides (24, 26) of the groove,
the seals (100, 102) extending substantially radially
inwardly or outwardly to engage respectively the inner
outwardly facing spherical wall surface (28) or
inwardly facing wall spherical wall surface (16).

4.    A machine according to any of claims 1 to 3,
characterized in that at least two working volumes
(A to F) are provided on each side of the partition (20).

5.    A machine according to any of claims 1 to 4,
wherein the partition sides (24, 26) each have a
sinusoidal and part conical configuration.

6.    A machine according to any of claims 1 to 5,
characterized in that the offset portion (44) has
opposite ends (112) within the housing (10), and thrust
bearing means (114, 116) formed on each of the opposite
ends slidably engaging the housing (10) about the axis
of the shaft (42).

7.    A machine according to any of claims 1 to 6, wherein the shaft (42) is hollow (54) and is split into
two parts (46, 48) in the region of the offset portion
(44) so that the rotor (62) may be fitted thereon,
a tie bolt (52) extending through the parts (46, 48)
to hold them in assembled relation.

8.    A machine according to any of claims 1 to 7,
wherein the eccentric includes frusto-conical bearing
means (56), for journalling the rotor (62), at each
of its ends, with the minor bases of the bearing means
facing each other.

9.    A machine according to any of claims 1 to 8,
wherein the housing (10) is formed of at least two
housing parts (12, 14) sandwiching the partition (20)
therebetween.

10.    A machine according to any of claims 1 to 9,
wherein the rotor (62) is split into two parts in the groove, means (106) holding the two parts in assembled relation.

Fig. 1.

Fig.2.

Fig.3.

Fig.4.